# EUROPEAN PATENT APPLICATION

(11) **EP 4 843 961 A1**
(43) Date of publication of application: **25.11.2026**
(21) Application number: 24918530.7
(22) Date of filing: 20.12.2024
(51) Int. Cl.: C02F 1/66, A01K 63/04

(54) **PH ADJUSTER FOR CIRCULATING WATER**

(30) Priority: 17.01.2024 JP 2024005140
(71) Applicant: Toagosei Co., Ltd., Minato-ku Tokyo 105-8419 (JP)
(72) Inventor: MATSUKI, Shiroshi, Tokyo 105-8419 (JP); HAYASHI, Keizo, Tokyo 105-8419 (JP)
(74) Representative: dompatent
(86) International application number: PCT/JP2024/045090
(87) International publication number: WO 2025/154473

(57) **Abstract**

A pH-adjusting agent for circulating water, containing an alkali metal compound that exhibits alkalinity and/or an alkaline earth metal compound that exhibits alkalinity, wherein the number of particles having a particle size of 0.5 µm or larger contained in the pH-adjusting agent is 150,000 particles/mL or less, based on an aqueous solution having a concentration of an alkali metal and/or an alkaline earth metal of 1 mol/L.

## Description

### Technical Field

The present invention relates to a pH-adjusting agent for circulating water.

### Background Art

In order to effectively utilize water resources, used water is circulated for reuse. An example of a situation in which the use of circulating water is effective is land-based aquaculture in which fish, shellfish, seaweed, and the like are artificially reared. Land-based aquaculture refers to aquaculture conducted in an environment established on land and is broadly classified into flow-through systems and closed recirculating systems.

The flow-through system is one in which aquaculture water is drawn from the natural environment and discharged after use.

The closed recirculating system is one in which aquaculture water is circulated and reused while being purified by a filtration system or the like.

In land-based aquaculture, various forms of contamination of the aquaculture water pose problems. For example, Patent Documents 1 and 2 disclose methods that use ozone to decompose ammonia in aquaculture water.

### Prior art Documents

### Patent Document

Patent Document 1: Japanese Patent Application Laid-Open No. 2015-192627
Patent Document 2: International Publication No. WO 2016/031827

### Summary of the Invention

### Problems to be Solved by the Invention

Various investigations into problems associated with circulating water revealed that aggregates form in the circulating water during circulation of the circulating water. The aggregates cause various adverse effects, such as deteriorating the water quality of the circulating water and hindering filtration of the circulating water.

The present invention relates to suppressing formation of aggregates during circulation of circulating water.

### Means for Solving the Problems

The present inventors investigated the cause of aggregate formation and found that a pH-adjusting agent used for pH adjustment of the circulating water was responsible. That is, the pH of the circulating water is adjusted during circulation, and depending on the pH-adjusting agent used, aggregates may form in the circulating water.

Further investigations by the present inventors revealed that aggregates form when the number of particles contained in a pH-adjusting agent (particularly a pH-adjusting agent containing an alkali metal compound or an alkaline earth metal compound that exhibits alkalinity) reaches or exceeds a certain level.

In other words, by reducing the number of particles contained in the pH-adjusting agent, the formation of aggregates can be suppressed.

The present invention includes the following embodiments.
[1] A pH-adjusting agent for circulating water, comprising an alkali metal compound that exhibits alkalinity and/or an alkaline earth metal compound that exhibits alkalinity, wherein
   the number of particles having a particle size of 0.5 µm or larger contained in the pH-adjusting agent is 150,000 particles/mL or less, based on an aqueous solution having a concentration of an alkali metal and/or an alkaline earth metal of 1 mol/L.
[2] The pH-adjusting agent according to [1], wherein
   the pH-adjusting agent comprises the alkali metal compound, and the alkali metal compound comprises a sodium compound that exhibits alkalinity.
[3] The pH-adjusting agent according to [2], wherein the sodium compound is at least one selected from the group consisting of sodium hydroxide, sodium carbonate, and sodium bicarbonate.
[3-1] The pH-adjusting agent according to [2] or [3], wherein the sodium compound is sodium hydroxide.
[4] The pH-adjusting agent according to any one of [1] to [3-1], wherein the number of the particles is 100,000 particles/mL or less.
[4-1] The pH-adjusting agent according to any one of [1] to [4], wherein the number of the particles is from 1 to 90,000 particles/mL.
[4-2] The pH-adjusting agent according to any one of [1] to [4-1], wherein the number of the particles is 5 to 90,000 particles/mL.
[4-3] The pH-adjusting agent according to any one of [1] to [4-2], wherein the number of the particles is 10 to 16,000 particles/mL.
[4-4] The pH-adjusting agent according to any one of [1] to [4-3], wherein the number of the particles is 100 to 16,000 particles/mL.
[5] The pH-adjusting agent according to any one of [1] to [4-4], wherein the particles contain iron.
[6] The pH-adjusting agent according to any one of [1] to [5], wherein the circulating water is circulating water for rearing aquatic organisms.
[7] The pH-adjusting agent according to any one of [1] to [6], wherein the circulating water is circulating water for land-based aquaculture.
[8] The pH-adjusting agent according to any one of [1] to [7], wherein the circulating water contains seawater.
[9] The pH-adjusting agent according to any one of [1] to [8], wherein the iron concentration in the pH-adjusting agent is 100 mg/kg or less, based on an aqueous solution having an alkali metal and/or alkaline earth metal concentration of 18 mol/L.
[9-1] The pH-adjusting agent according to any one of [1] to [9], wherein the iron concentration in the pH-adjusting agent is 10 mg/kg or less, based on an aqueous solution having an alkali metal and/or alkaline earth metal concentration of 18 mol/L.
[9-2] The pH-adjusting agent according to any one of [1] to [9-1], wherein the iron concentration in the pH-adjusting agent is 1 mg/kg or less, based on an aqueous solution having an alkali metal and/or alkaline earth metal concentration of 18 mol/L.
[10] The pH-adjusting agent according to any one of [1] to [9-2], wherein the zinc concentration in the pH-adjusting agent is 30 µg/kg or less, based on an aqueous solution having an alkali metal and/or alkaline earth metal concentration of 18 mol/L.
[10-1] The pH-adjusting agent according to any one of [1] to [10], wherein the zinc concentration in the pH-adjusting agent is 20 µg/kg or less, based on an aqueous solution having an alkali metal and/or alkaline earth metal concentration of 18 mol/L.
[10-2] The pH-adjusting agent according to any one of [1] to [10-1], wherein the zinc concentration in the pH-adjusting agent is 10 µg/kg or less, based on an aqueous solution having an alkali metal and/or alkaline earth metal concentration of 18 mol/L.
[11] The pH-adjusting agent according to any one of [1] to [10-2], wherein the arsenic concentration in the pH-adjusting agent is 10 µg/kg or less, based on an aqueous solution having an alkali metal and/or alkaline earth metal concentration of 18 mol/L.
[1A] A method of rearing a rearing target, the method comprising: drawing rearing water from a rearing tank for rearing the rearing target;
   adding the pH-adjusting agent according to any one of [1] to [11] to the drawn rearing water to adjust the pH of the rearing water; and
   returning the pH-adjusted rearing water to the rearing tank.
[1B] A method of aquaculturing an aquaculture target, the method comprising: drawing aquaculture water from a land-based aquaculture tank for aquaculturing the aquaculture target;
   adding a pH-adjusting agent according to any one of [1] to [11] to the drawn aquaculture water to adjust the pH of the aquaculture water; and
   returning the pH-adjusted aquaculture water to the aquaculture tank.

### Advantageous Effects of the Invention

The present invention can suppress the formation of aggregates during circulation of circulating water.

### Modes for Carrying Out the Invention

Embodiments of the present invention are specifically described below; however, the present invention is not limited to these embodiments and may be modified in various ways without departing from the scope of the present invention.

### <pH-adjusting agent>

An embodiment of the present invention relates to a pH-adjusting agent for circulating water, the pH-adjusting agent containing an alkali metal compound exhibiting alkalinity or an alkaline earth metal compound exhibiting alkalinity, wherein the number of particles having a particle size of 0.5 µm or more contained in the pH-adjusting agent is 150,000 particles/mL or less, based on an aqueous solution having a concentration of an alkali metal or an alkaline earth metal of 1 mol/L.

The pH-adjusting agent according to this embodiment can suppress formation of aggregates even when used for pH adjustment of circulating water.

Formation of aggregates is caused by particles contained in the pH-adjusting agent, and it is unexpected and surprising that such trace impurities cause significant problems in the circulating water.

In particular, when the circulating water is circulating water for rearing aquatic organisms (rearing water) or circulating water for land-based aquaculture (aquaculture water), the circulating water contains various components such as naturally derived organic matter and excrement from rearing targets or aquaculture targets (e.g., fish), and therefore the necessity of using a high-purity pH-adjusting agent when adjusting the pH of the circulating water has not been recognized. Therefore, it is unexpected and surprising that reducing the number of particles contained in the pH-adjusting agent can suppress formation of aggregates.

### [Applications]

The pH-adjusting agent according to this embodiment is used to adjust the pH of circulating water. The circulating water is preferably circulating water for rearing aquatic organisms (rearing water), and more preferably circulating water for land-based aquaculture (aquaculture water).

Land-based aquaculture is preferably closed recirculating land-based aquaculture or semi-closed recirculating land-based aquaculture. Semi-closed recirculating land-based aquaculture is an intermediate form between flow-through land-based aquaculture and closed recirculating land-based aquaculture, in which a portion of the used aquaculture water is discharged while the remaining aquaculture water is circulated and reused. From the perspective of suppressing formation of aggregates when circulating aquaculture water, the effect of the pH-adjusting agent according to this embodiment is significantly exhibited when closed recirculating land-based aquaculture is employed.

The type of circulating water is not particularly limited, and may be selected according to the application. Examples of circulating water include seawater, river water, groundwater, and rainwater. Circulating water artificially prepared according to the intended use may be used. The circulating water preferably contains seawater.

Seawater may be water taken from the sea, or may be artificially prepared. Examples of artificially prepared seawater include water containing 0.1 to 10 mass% of sodium chloride.

The type of targets to be reared or aquacultured is not particularly limited as long as the targets can be reared or aquacultured in water. Examples of the targets include fish (e.g., marine fish and freshwater fish), shellfish, crustaceans, and seaweeds.

### [Components]

The pH-adjusting agent according to this embodiment contains an alkali metal compound exhibiting alkalinity and/or an alkaline earth metal compound exhibiting alkalinity. The alkali metal compound and the alkaline earth metal compound may each be used alone, or two or more thereof may be used in combination.

Examples of alkali metal compounds include sodium compounds that exhibit alkalinity. Examples of sodium compounds include sodium hydroxide, sodium carbonate, and sodium bicarbonate.

Examples of alkali metal compounds include potassium compounds that exhibit alkalinity. Examples of potassium compounds that exhibit alkalinity include potassium hydroxide, potassium carbonate, and potassium bicarbonate.

Examples of alkaline earth metal compounds include calcium compounds that exhibit alkalinity. Examples of calcium compounds include calcium hydroxide, calcium carbonate, calcium oxide, and calcium bicarbonate.

The pH-adjusting agent may contain a solvent (preferably water) that dissolves the alkali metal compound and the alkaline earth metal compound. When the alkali metal compound is sodium hydroxide, the pH-adjusting agent is preferably an aqueous solution of sodium hydroxide with a concentration of 48 mass%.

### [Particles]

The number of particles contained in the pH-adjusting agent according to this embodiment is 150,000 particles/mL or less, preferably 120,000 particles/mL or less, more preferably 90,000 particles/mL or less, and even more preferably 16,000 particles/mL or less. The lower limit of the number of particles is preferably 0 particles/mL, but may be 1 particle/mL or more, 5 particles/mL or more, 10 particles/mL or more, or 100 particles/mL or more. These numbers of particles are based on an aqueous solution having an alkali metal and/or alkaline earth metal concentration of 1 mol/L. In determining the number of particles, it is not always necessary to prepare an aqueous solution having a concentration of alkali metals and/or alkaline earth metals of 1 mol/L; the number of particles may be calculated by converting the concentration to 1 mol/L. For example, when the number of particles in an aqueous solution having an alkali metal and/or alkaline earth metal concentration of 0.5 mol/L is 1,000/mL, the number of particles can be regarded as 2,000/mL by converting the concentration to 1 mol/L (similarly, in the measurement of impurity concentrations described later, calculation by concentration conversion is also possible). Note that, when the pH-adjusting agent contains a plurality of kinds of alkali metals and/or alkaline earth metals, an aqueous solution having a total concentration of these metals of 1 mol/L is used as the reference.

The particles to be measured are those with a particle size of 0.5 µm or larger. No particular limitation is imposed on the upper limit of the particle size, and may be, for example, 100 µm or 200 µm.

Since the presence of particles causes formation of aggregates in circulating water, the smaller the number of particles, the more preferable it is. The number of particles can be measured using a commercially available particle counter. Specifically, the measurement can be performed by a side-scattering method using a semiconductor laser.

Examples of particles include those containing iron. Particles containing iron are presumed to particularly easily cause formation of aggregates, and therefore reducing the number of particles containing iron is preferable from the perspective of suppressing formation of aggregates.

Particles may also cause clogging of a filter during filtration in a production process of the pH-adjusting agent. When particles that accumulate in piping or a storage tank during the production process are discharged all at once due to pressure fluctuations or the like, the likelihood that a filter becomes clogged increases. Furthermore, when particles adhere to the surface of a heat exchanger, heat-exchange efficiency is reduced. From the perspective of production efficiency of the pH-adjusting agent, reducing the number of particles is preferable.

### [Impurities]

The amount of impurities contained in the pH-adjusting agent according to this embodiment is preferably small. Impurities include, for example, iron, zinc, and arsenic. The impurity concentrations described below are concentrations of impurities contained in the pH-adjusting agent, including particles.

### (Iron: Fe)

The iron concentration in the pH-adjusting agent according to this embodiment is preferably 100 mg/kg or less (hereinafter also referred to as ppm), more preferably 10 mg/kg or less, and even more preferably 1 mg/kg or less. No particular limitation is imposed on the lower limit of the iron concentration, and may be, for example, 0 mg/kg or 0.1 mg/kg. These iron concentrations are based on an aqueous solution having an alkali metal and/or alkaline earth metal concentration of 18 mol/L.

The iron concentration can be measured by the method described in the Examples below.

The lower the iron concentration, the more the formation of aggregates in the circulating water can be suppressed.

### (Zinc: Zn)

The zinc concentration in the pH-adjusting agent according to this embodiment is preferably 30 µg/kg or less (hereinafter also referred to as ppb), more preferably 20 µg/kg or less, even more preferably 10 µg/kg or less, further preferably 5 µg/kg or less, further preferably 4 µg/kg or less, further preferably 3 µg/kg or less, further preferably 2 µg/kg or less, and particularly preferably 1 µg/kg or less. No particular limitation is imposed on the lower limit of the zinc concentration, and may be, for example, 0 µg/kg or 10 µg/kg. These zinc concentrations are based on an aqueous solution having an alkali metal and/or alkaline earth metal concentration of 18 mol/L.

The zinc concentration can be measured by the method described in the below-mentioned Examples.

### (Arsenic: As)

The arsenic concentration in the pH-adjusting agent according to this embodiment is preferably 10 µg/kg or less, more preferably 5 µg/kg or less, even more preferably 4 µg/kg or less, further preferably 3 µg/kg or less, further preferably 2 µg/kg or less, and particularly preferably 1 µg/kg or less. No particular limitation is imposed on the lower limit of the arsenic concentration, and may be, for example, 0 µg/kg or 10 µg/kg. These arsenic concentrations are based on an aqueous solution having an alkali metal and/or alkaline earth metal concentration of 18 mol/L.

The arsenic concentration can be measured by the method described in the Examples below.

Zinc and arsenic are not impurities related to formation of aggregates but are impurities related to safety. When zinc or arsenic accumulates in the aquaculture target, it may adversely affect humans who ingest the aquaculture target. Therefore, from the viewpoint of safety, the lower the concentrations of zinc and arsenic, the more preferable they are.

The concentrations of iron, zinc, and arsenic can be controlled, e.g., by selecting high-purity raw materials and by applying linings to the interiors of tanks and pipes in the production process.

### <pH Adjustment Method>

An embodiment of the present invention relates to a method of adjusting the pH of circulating water, the method including adding a pH-adjusting agent to the circulating water.

Details of each element in this embodiment are as described in the above <pH-adjusting agent> section.

The amount of the pH-adjusting agent to be added is not particularly limited and may be added in an amount that provides a pH suitable for the application.

### <Circulation Method>

An embodiment of the present invention relates to a method of circulating circulating water, the method including:
drawing circulating water from a storage tank;
adding a pH-adjusting agent to the drawn circulating water to adjust the pH of the circulating water; and
returning the pH-adjusted circulating water to the storage tank.

Details of each element in this embodiment are as described in the above <pH-adjusting agent> section.

The amount of the pH-adjusting agent to be added is not particularly limited and may be added in an amount that provides a pH suitable for the application of the circulating water.

### <Rearing Method or Aquaculture Method>

An embodiment of the present invention relates to a method of rearing a rearing target, the method including:
drawing rearing water from a rearing tank for rearing the rearing target;
adding a pH-adjusting agent to the drawn rearing water to adjust the pH of the rearing water; and
returning the pH-adjusted rearing water to the rearing tank.

An embodiment of the present invention relates to a method of aquaculturing an aquaculture target, the method including:
drawing aquaculture water from a land-based aquaculture tank for aquaculturing the aquaculture target;
adding a pH-adjusting agent to the drawn aquaculture water to adjust the pH of the aquaculture water; and
returning the pH-adjusted aquaculture water to the aquaculture tank.

Details of each element in this embodiment are as described in the above <pH-adjusting agent> section.

The amount of the pH-adjusting agent to be added is not particularly limited and may be added in an amount that provides a pH suitable for the target to be reared or aquacultured.

In the rearing method or the aquaculture method according to this embodiment, further treatment necessary to maintain the water quality of the rearing water or the aquaculture water may be performed. Examples of such treatments are filtration treatment, denitrification treatment, foam separation treatment, and sterilization treatment.

### [Examples]

The present invention will be described in further detail below using examples and comparative examples; however, the scope of the present invention is not limited to these.

The various values in the examples may also be regarded as preferred lower limits or preferred upper limits in an embodiment of the present invention. Further, two values of the same type in the examples may be appropriately combined to define a preferred numerical range.

### <pH-adjusting agent>

An aqueous solution of sodium chloride was electrolyzed to produce an aqueous solution of sodium hydroxide having a concentration of 30 mass%. The aqueous solution of sodium hydroxide was evaporatively concentrated to produce an aqueous solution of sodium hydroxide having a concentration of 48 mass%.

A pH-adjusting agent containing various numbers of particles (0.5 µm or larger) was prepared by filtering the 48 mass% aqueous solution of sodium hydroxide any number of times through a general-purpose cartridge filter. The number of particles was measured using a particle counter (KS-42AF, Rion Co., Ltd.).

### [Measurement of Iron Concentration]

A precisely weighed sample was transferred to a volumetric flask and diluted with ultrapure water; a predetermined amount of hydrochloric acid was added, and ultrapure water was further added to bring the solution to the mark. Using an ICP emission spectrometer, the iron concentration was measured by the standard addition method.

### [Measurement of Zinc Concentration]

A precisely weighed sample was transferred to a container, and nitric acid, ammonium acetate, and ultrapure water were added; the liquid was then passed through a chelate disk to collect zinc. Zinc was recovered from the chelate disk, and the zinc concentration was measured by ICP-MS using a calibration-curve method.

### [Measurement of Arsenic Concentration]

A precisely weighed sample was transferred to a volumetric flask and diluted with ultrapure water; a predetermined amount of hydrochloric acid was added, and ultrapure water was further added to bring the solution to the mark. The solution was passed through a hydride generation apparatus, and the arsenic concentration was measured from the generated hydrides by the standard addition method using an ICP emission spectrometer.

### <Aggregation-Precipitation Test>

Used aquaculture water (seawater) was drawn from the aquaculture tank, and a pH-adjusting agent (an aqueous solution of sodium hydroxide having a concentration of 48 mass%) was added to the aquaculture water until the pH of the aquaculture water reached 7.

The presence or absence of aggregation and precipitation in the aquaculture water to which the pH-adjusting agent had been added was visually confirmed. The evaluation criteria for the aggregation-precipitation test are as follows. The results are shown in Table 1.

### [Evaluation Criteria]

A: Colorless and transparent
B: Suspended objects observed
C: Slight turbidity
D: Aggregation and sedimentation observed

### <Production Test>

An aqueous solution of sodium chloride was electrolyzed to produce an aqueous solution of sodium hydroxide having a concentration of 30 mass%. The aqueous solution of sodium hydroxide was evaporatively concentrated to produce an aqueous solution of sodium hydroxide having a concentration of 48 mass%. The 48 mass% aqueous solution of sodium hydroxide was cooled using a heat exchanger and received into a product storage tank. The heat-exchange efficiency was evaluated by measuring the temperature of the aqueous solution of sodium hydroxide. When the product was shipped from the product storage tank, the aqueous solution of sodium hydroxide was passed through a filter and filled into a product container. The clogging of the filter was evaluated by measuring the pressure of the aqueous solution of sodium hydroxide.

The evaluation criteria for the production test are as follows. The results are shown in Table 1.

### [Evaluation Criteria]

A: No issues
B: Tendency for earlier occurrence of filter clogging
C: Clearly earlier occurrence of filter clogging
D: Clearly earlier occurrence of filter clogging and reduction in heat-exchange efficiency

**[Table 1]**

| | Number of particles (particles/mL) | Fe concentration (ppm) | Zn concentration (ppb) | As concentration (ppb) | Evaluation of aggregation and sedimentation | Evaluation of production |
|---|---|---|---|---|---|---|
| Example 1 | 3,164 | 0.7 | <10 | <10 | A | A |
| Example 2 | 9,613 | 0.9 | <10 | <10 | A | A |
| Example 3 | 15,954 | 0.8 | <10 | <10 | A | A |
| Example 4 | 83,351 | 0.9 | <10 | <10 | B | A |
| Example 5 | 118,708 | 7.8 | 12 | <10 | B | B |
| Example 6 | 141,920 | 75 | 21 | <10 | C | C |
| Comparative Example 1 | 156,929 | 520 | 31 | 11 | D | D |

| | | | | | | |
|---|---|---|---|---|---|---|
| Number of particles: Based on Na aqueous solution having concentration of 1 mol/L Concentration of Fe, Zn, and As: Based on Na aqueous solution having concentration of 18 mol/L | | | | | | |

## Claims

1. A pH-adjusting agent for circulating water, comprising an alkali metal compound that exhibits alkalinity and/or an alkaline earth metal compound that exhibits alkalinity, wherein
the number of particles having a particle size of 0.5 µm or larger contained in the pH-adjusting agent is 150,000 particles/mL or less, based on an aqueous solution having a concentration of an alkali metal and/or an alkaline earth metal of 1 mol/L.

2. The pH-adjusting agent according to claim 1, wherein
the pH-adjusting agent comprises the alkali metal compound, and
the alkali metal compound comprises a sodium compound that exhibits alkalinity.

3. The pH-adjusting agent according to claim 2, wherein
the sodium compound is at least one selected from the group consisting of sodium hydroxide, sodium carbonate, and sodium bicarbonate.

4. The pH-adjusting agent according to any one of claims 1 to 3, wherein
the number of the particles is 100,000 particles/mL or less.

5. The pH-adjusting agent according to any one of claims 1 to 3, wherein
the particles contain iron.

6. The pH-adjusting agent according to any one of claims 1 to 3, wherein
the circulating water is circulating water for rearing aquatic organisms.

7. The pH-adjusting agent according to any one of claims 1 to 3, wherein
the circulating water is circulating water for land-based aquaculture.

8. The pH-adjusting agent according to any one of claims 1 to 3, wherein
the circulating water contains seawater.

9. The pH-adjusting agent according to any one of claims 1 to 3, wherein
the iron concentration in the pH-adjusting agent is 100 mg/kg or less, based on an aqueous solution having an alkali metal and/or alkaline earth metal concentration of 18 mol/L.

10. The pH-adjusting agent according to any one of claims 1 to 3, wherein
the zinc concentration in the pH-adjusting agent is 30 µg/kg or less, based on an aqueous solution having an alkali metal and/or alkaline earth metal concentration of 18 mol/L.

11. The pH-adjusting agent according to any one of claims 1 to 3, wherein
the arsenic concentration in the pH-adjusting agent is 10 µg/kg or less, based on an aqueous solution having an alkali metal and/or alkaline earth metal concentration of 18 mol/L.
